# EUROPEAN PATENT SPECIFICATION

(11) **EP 3 085 957 B1**
(45) Date of publication and mention of the grant of the patent: **14.08.2019**
(21) Application number: 16171889.5
(22) Date of filing: 11.05.2015
(51) Int. Cl.: F03D 80/70

(54) **SLEWING BEARING DEVICE FOR A WIND TURBINE**
SCHWENKBARE LAGERVORRICHTUNG FÜR EINE WINDTURBINE
DISPOSITIF DE PALIER DE PIVOTEMENT POUR UNE ÉOLIENNE

(30) Priority: 12.08.2014 JP 2014164017
(43) Date of publication of application: 26.10.2016
(62) Divisional of application: 15167123.7
(73) Proprietor: MITSUBISHI HEAVY INDUSTRIES, LTD., Minato-ku Tokyo 108-8215 (JP)
(72) Inventor: Yoshida, Takafumi, Tokyo, 108-8215 (JP); Takeuchi, Hiroaki, Tokyo, 108-8215 (JP); Okano, Yasushi, Tokyo, 108-8215 (JP); Suzuki, Kazutaka, Tokyo, 108-8215 (JP)
(74) Representative: Intès, Didier Gérard André

(56) References cited:
- EP-A1- 1 741 940
- WO-A1-2012/080350
- US-A1- 2012 009 063

## Description

### TECHNICAL FIELD

The present disclosure relates to a slewing bearing device for a wind turbine, and a wind turbine rotor and a wind turbine generator having the same.

### BACKGROUND

Wind turbine generators which utilize wind as renewable energy to generate electric power have become popular in recent years in view of preservation of the global environment. In a general wind turbine generator, wind turbine blades attached to a rotor hub receive wind, so that the rotor hub and a main shaft connected to the rotor hub rotate, the rotation speed of the main shaft being increased by a gearbox and the increased speed being inputted to a generator which thereby generates electric power.

A wind turbine generator may include a slewing bearing device configured to attach a wind turbine blade to a rotor hub rotatably to set the pitch angle of the wind turbine blade to an optimum pitch angle that corresponds to the wind velocity. A slewing bearing device may be a roller bearing including an inner race, an outer race, and a plurality of rolling elements (ball bearing, rollers, or the like) disposed between the inner race and the outer race.

In a wind turbine generator which includes a slewing bearing device interposed between each wind turbine blade and a rotor hub, the wind load applied to the wind turbine blades and a nacelle may cause loads including a moment load to be applied unevenly to the bearing device, which may lead to structural deformation of the inner race and the outer race. If the structural deformation occurs in the inner race or the outer race, a suitable contact state of the inner race and the outer race with respect to the rolling elements cannot be maintained, and the roller load distribution (load distribution of the rolling elements) becomes uneven, which shortens the lifetime of the bearing device.

Wind turbine generators have become large in size in recent years in view of improvement of power generation efficiency, which results in the increasing tendency of the load applied to a slewing bearing device disposed between each wind turbine blade and a rotor hub. Thus, technologies for restricting the above described structural deformation of an inner race and an outer race have been studied.

Patent Document 1 discloses a slewing bearing device in which a side plate is attached to at least one of an inner race or an outer race, the side plate being orthogonal to the axial direction of the bearing, to restrict structural deformation of at least one of the inner race or the outer race.

Patent Document 2 discloses a slewing bearing device in which bolt holes are disposed on the outer circumferential surface of the outer race and reinforcement members for deformation restriction are attached to the outer circumferential surface of the outer race with bolts, in order to reinforce the outer race.

WO 2012/080350, which is considered the closest prior art discloses a hub for a rotor of a wind turbine, comprising a bearing.

EP1741940 discloses a barrel-shaped bearing.

### Citation List

### Patent Literature

Patent Document 1: WO 2006/129351A
Patent Document 2: US 8322928 B

### SUMMARY

In a case where an outer race of a bearing is reinforced by a side plate as described in Patent Document 1, it is necessary to secure a gap of a sufficient size between an inner race and the side plate attached to an end surface in the axial direction of the outer race, to prevent interference of the side plate attached to the end surface in the axial direction of the outer race to the inner race. Thus, reinforcement that employs the side plate described in Patent Document 1 may be difficult to apply to the outer race as compared to a case where the reinforcement is applied to the inner race.

On the other hand, in a case where bolt holes are disposed on the outer circumferential surface of the outer race and reinforcement members for deformation restriction are attached to the outer circumferential surface of the outer race with bolts as described in Patent Document 2, there is no risk of interference of the reinforcement members to the inner race. However, in the slewing bearing device described in Patent Document 2, the outer race is reinforced by utilizing only the rigidity of the reinforcement members additionally attached to the outer circumferential surface of the outer race with the bolts, and thus the effect to restrict deformation of the outer race is limited. Further, the bearing is required to have high rigidity and thus generally includes a material that has high elasticity, and moreover, the bearing is required to have a long lifetime and thus includes a hard material. Thus, processing the outer race to create bolt holes on the outer circumferential surface of the outer race for attaching reinforcement members may lead to an increase in the production cost of the bearing.

In view of the above issues, an object of at least one embodiment of the present invention is to provide a slewing bearing device for a wind turbine whereby outward deformation of an outer race of the slewing bearing device for a wind turbine in the radial direction of the outer race is restricted, and whereby it is possible to reduce the cost, as well as a wind turbine rotor and a wind turbine generator having the slewing bearing device for a wind turbine, according to the appended claims.
(1) A slewing bearing device for a wind turbine according to at least one embodiment of the present invention is to attach a wind turbine blade to a rotor hub rotatably. The slewing bearing device for a wind turbine includes: an outer race fixed to the rotor hub; an inner race fixed to the wind turbine blade; a plurality of rolling elements disposed between the outer race and the inner race; and a force receiving part fixed to the rotor hub or formed integrally with the rotor hub. The force receiving part is configured to receive force transmitted from an outer circumferential surface of the outer race when the outer race is about to deform outward in a radial direction of the outer race.
   With the slewing bearing device for a wind turbine described in the above (1), when the outer race is about to deform outward in the radial direction of the outer race (hereinafter, when there is merely cited "radial direction", it refers to the radial direction of the outer race), the force receiving part fixed to the rotor hub or formed integrally with the rotor hub receives the force transmitted from the outer circumferential surface of the outer race, which makes it possible to effectively restrict the outward deformation of the outer race in the radial direction by utilizing rigidity of the rotor hub. In this way, it is possible to restrict uneven distribution of loads to the plurality of rolling elements, and to increase the lifetime of the bearing.
   Meanwhile, the bearing is required to have high rigidity, and thus generally includes a material that has high elasticity. Further, the bearing is required to have a long lifetime and thus includes a hard material. Thus, it is not easy to process the outer race, and the production cost of the outer race is likely to rise in a case of the conventional technique in which bolt holes are disposed on the outer race itself and reinforcement members are attached by bolts to restrict deformation. In this regard, according to the slewing bearing device for a wind turbine described in the above (1), force transmitted from the outer race is received by the force receiving part fixed to the rotor hub or formed integrally with the rotor hub, which makes it possible to restrict deformation of the outer race. Thus, it is not necessary to provide bolt holes or the like for attaching reinforcement members for restricting deformation on the outer race itself. As a result, it is possible to restrict deformation of the outer race without particularly processing the outer race, and to reduce cost of the bearing device.
(2) In some embodiments, in the slewing bearing device for a wind turbine described in the above (1), the force receiving part includes a first tapered surface facing the outer circumferential surface of the outer race. The first tapered surface is formed so that a gap between the first tapered surface and the outer circumferential surface of the outer race is reduced toward the rotor hub in an axial direction of the outer race. The slewing bearing device for a wind turbine further includes a wedge member disposed between the first tapered surface and the outer circumferential surface of the outer race.
   With the slewing bearing device for a wind turbine described in the above (2), it is possible to have no gap between the first tapered surface of the force receiving part and the outer circumferential surface of the outer race by providing the wedge member, which makes it possible to transmit the outward force from the outer race in the radial direction to the force receiving part securely. Thus, it is possible to enhance the effect to restrict deformation of the outer race achieved by the force receiving part that can utilize the rigidity of the rotor hub.
(3) In some embodiments, the slewing bearing device for a wind turbine described in the above (2) further includes a bolt extending in the axial direction, for fixing the wedge member to the force receiving part and applying pressing force toward the rotor hub in the axial direction to the wedge member.
   With the slewing bearing device for a wind turbine described in the above (3), the pressing force toward the rotor hub in the axial direction is applied to the wedge member by use of the bolts, which makes it possible to maintain a state in which the wedge member is in contact with the tapered surface of the force receiving part and the outer circumferential surface of the outer race. In this way, it is possible to transmit the outward force in the radial direction from the outer race to the force receiving part more securely. Thus, it is possible to enhance the effect to restrict deformation of the outer race achieved by the force receiving part that can utilize the rigidity of the rotor hub.
(4) In some embodiments, in the slewing bearing device for a wind turbine described in the above (1), the force receiving part includes a bolt hole which extends in the radial direction of the outer race, and the slewing bearing device for a wind turbine further includes a bolt screwed into the bolt hole so that a tip end of the bolt contacts the outer circumferential surface of the outer race.
   With the slewing bearing device for a wind turbine described in the above (4), the tip end of the bolt screwed into the bolt hole formed through the force receiving part is in contact with the outer circumferential surface of the outer race, which makes it possible to securely transmit the outward force from the outer race in the radial direction to the force receiving part. Thus, it is possible to further enhance the effect to restrict deformation of the outer race achieved by the force receiving part that can utilize the rigidity of the rotor hub.
(5) In some embodiments, the slewing bearing device for a wind turbine described in the above (1) further includes a resin portion formed so as to fill a gap between the force receiving part and the outer circumferential surface of the outer race.
   With the slewing bearing device for a wind turbine described in the above (5), since the gap between the force receiving part and the outer circumferential surface of the outer race is filled with the resin portion, it is possible to transmit the outward force in the radial direction from the outer race to the force receiving part securely. Thus, it is possible to further enhance the effect to restrict deformation of the outer race achieved by the force receiving part that can utilize the rigidity of the rotor hub.
(6) In some embodiments, in the slewing bearing device for a wind turbine described in the above (1), the force receiving part is a ring-shaped unit including a plurality of segments extending along an outer circumferential surface of the outer race. The slewing bearing device for a wind turbine further includes a fastening member for fastening the plurality of segments with one another so that the outer race is clamped by the ring-shaped unit from outside in the radial direction of the outer race, and a fixing member for fixing the ring-shaped unit to the rotor hub.
   With the slewing bearing device for a wind turbine described in the above (6), since the ring-shaped unit as the force receiving part is fixed to the rotor hub by the fixing member, it is possible to effectively restrict deformation of the outer race with the ring-shaped unit that can utilize the rigidity of the rotor hub. Further, since the fastening function of the fastening member maintains a state in which the inner circumferential surface of the ring-shaped unit is in contact with the outer circumferential surface of the outer race, the outward force in the radial direction from the outer race is securely transmitted to the ring-shaped unit. In this way, it is possible to enhance the effect to restrict deformation of the outer race achieved by the ring-shaped unit that can utilize the rigidity of the rotor hub.
(7) A wind turbine rotor according to at least one embodiment of the present invention includes: at least one wind turbine blade; a rotor hub to which the at least one wind turbine blade is attached; and a slewing bearing device for a wind turbine, for rotatably attaching the at least one wind turbine blade to the rotor hub. The slewing bearing device for a wind turbine is the slewing bearing device for a wind turbine described in any one of the above (1) to (6).
   With the wind turbine rotor described in the above (7), since the wind turbine blade is attached to the rotor hub via the slewing bearing device for a wind turbine described in any one of the above (1) to (6), it is possible to restrict uneven distribution of loads to the plurality of rolling elements, and to increase the lifetime of the slewing bearing device. In this way, it is possible to reduce the risk that it becomes necessary to disassemble the wind turbine rotor for replacement of the bearing.
(8) A wind turbine generator according to at least one embodiment of the present invention includes the wind turbine rotor described in the above (7), and a generator driven in accordance with rotation of the wind turbine rotor.

With the wind turbine generator described in the above (8), since the generator is driven in accordance with rotation of the wind turbine rotor described in the above (7), it is possible to reduce the risk that it becomes necessary to disassemble the wind turbine rotor for replacement of the bearing, and to achieve stable operation of the wind turbine generator.

According to at least one embodiment of the present invention, with the slewing bearing device for a wind turbine for attaching the wind turbine blade rotatably to the rotor hub, and the wind turbine rotor and the wind turbine generator having the above slewing bearing device for a wind turbine, it is possible to restrict outward deformation of the outer race in the radial direction of the outer race as well as to reduce the cost.

### BRIEF DESCRIPTION OF DRAWINGS

FIG. 1 is a schematic diagram illustrating a configuration of a wind turbine generator according to one embodiment of the present invention.
FIG. 2 is a schematic cross-sectional view of a slewing bearing device according to one embodiment of the present invention.
FIGs. 3 and 4 are each an example of a cross-sectional view of the slewing bearing device illustrated in FIG. 2 taken along line A-A.
FIG. 5 is a schematic cross-sectional view of a slewing bearing device according to one embodiment of the present invention.
FIGs. 6 and 7 are each an example of a cross-sectional view of the slewing bearing device illustrated in FIG. 5 taken along line B-B.
FIG. 8 is a schematic cross-sectional view of a slewing bearing device according to one embodiment of the present invention.
FIG. 9 is an example of a cross-sectional view of the slewing bearing device illustrated in FIG. 8 taken along line C-C.
FIG. 10 is a schematic cross-sectional view of a slewing bearing device according to one embodiment of the present invention.
FIG. 11 is an example of a cross-sectional view of the slewing bearing device illustrated in FIG. 10 taken along line D-D.

### DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

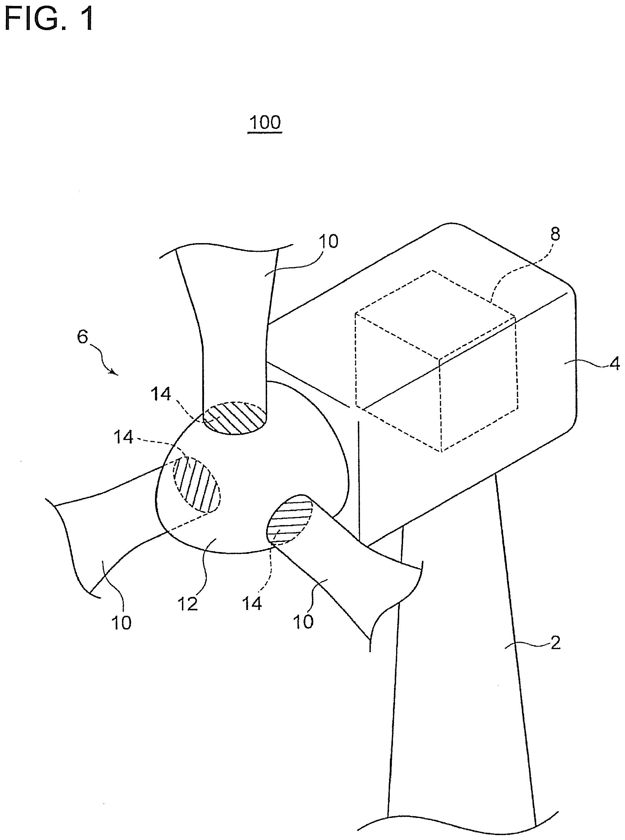

FIG. 1 is a schematic diagram illustrating a configuration of a wind turbine generator 100 according to one embodiment of the present invention. The wind turbine generator 100 includes a tower 2, a nacelle 4 supported on the tower 2, a wind turbine rotor 6, and a generator 8 housed in the nacelle 4 and driven in accordance with rotation of the wind turbine rotor 6.

The wind turbine rotor 6 includes at least one wind turbine blade 10, a rotor hub 12 to which the wind turbine blade 10 is attached, and at least one slewing bearing device 14 for rotatably attaching the wind turbine blade 10 to the rotor hub 12.

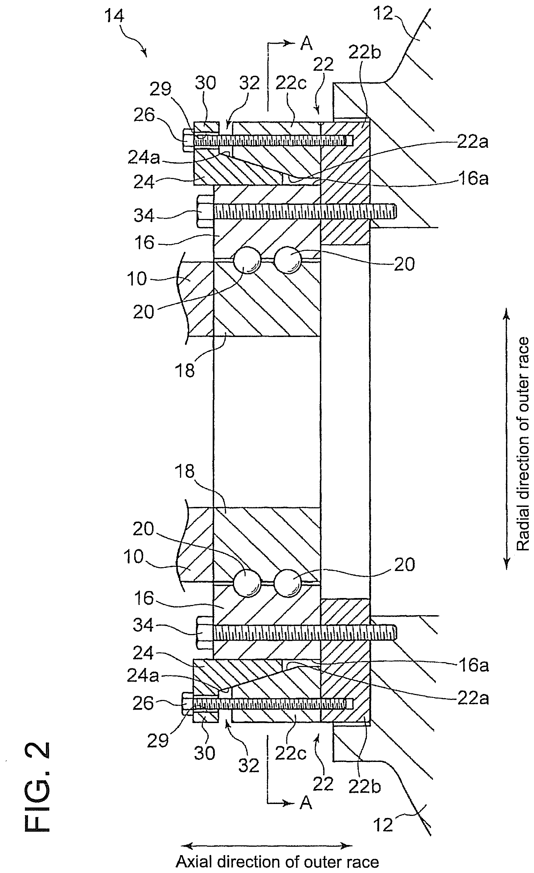

Now, some embodiments related to the configuration example of the slewing bearing device 14 will be described with reference to FIGs. 2 to 11.

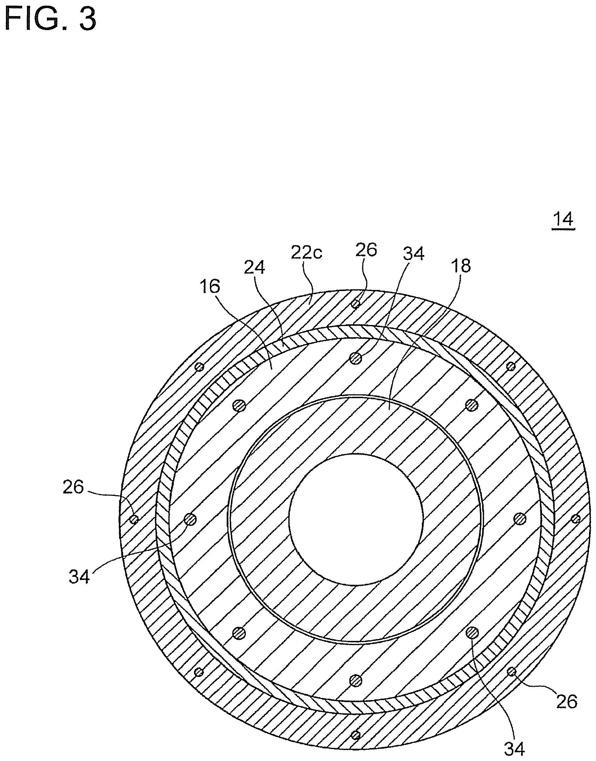

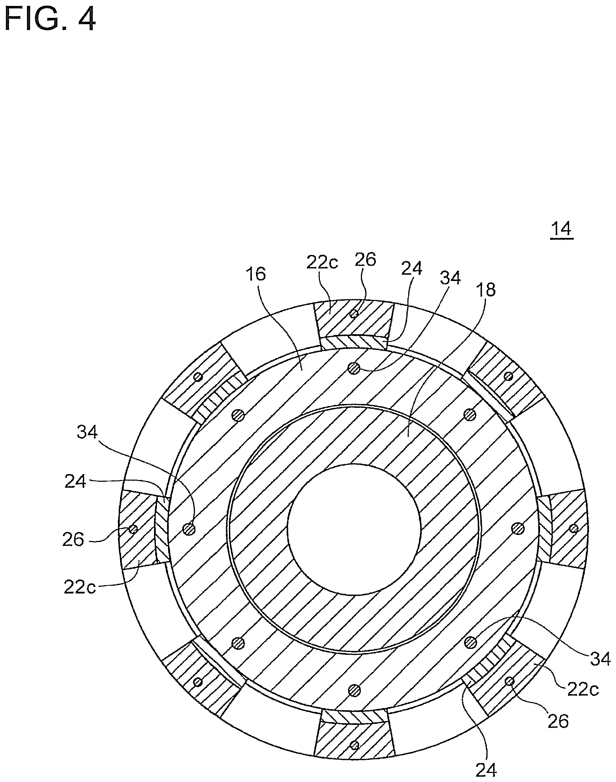

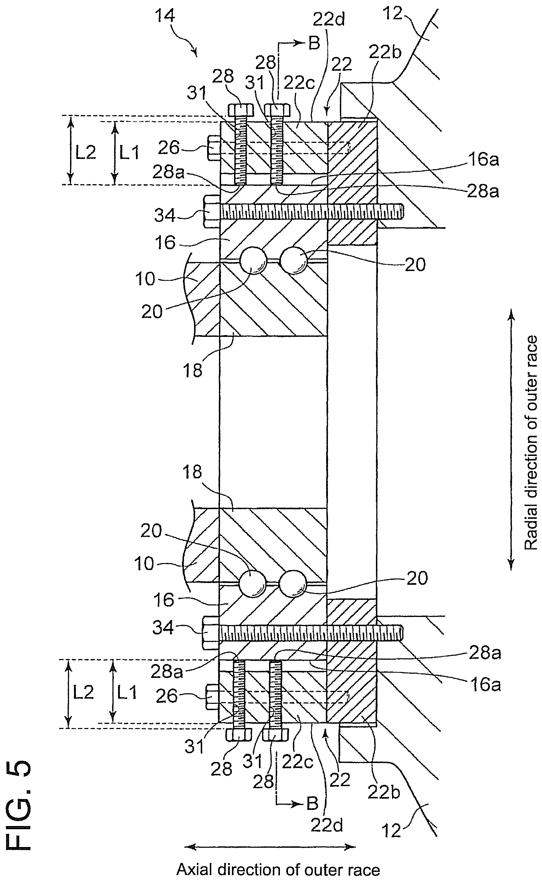

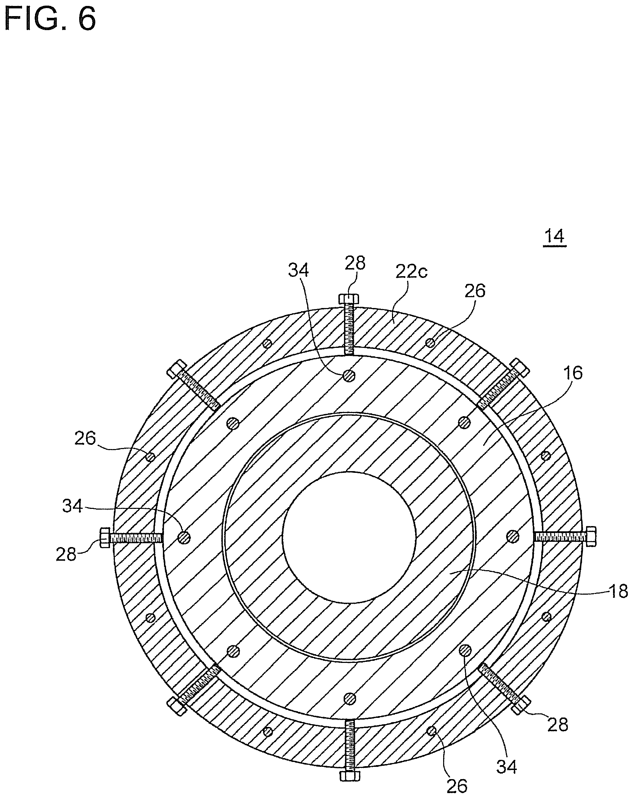

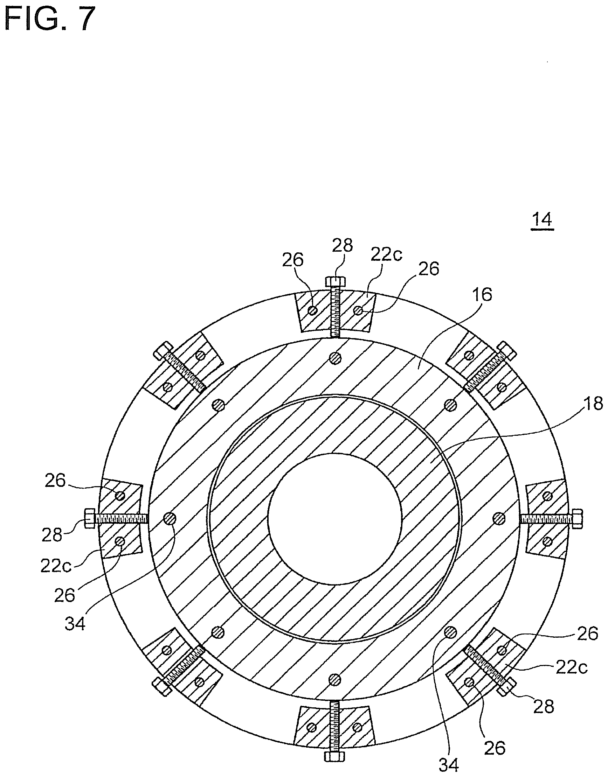

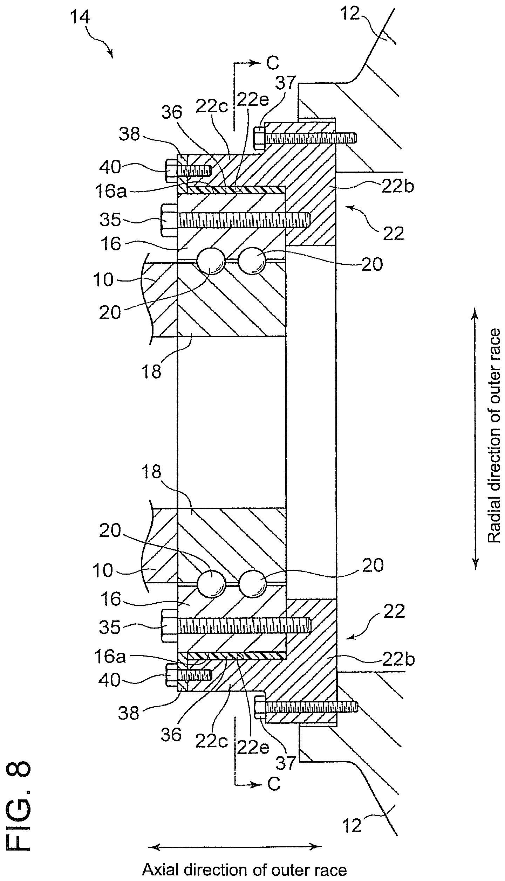

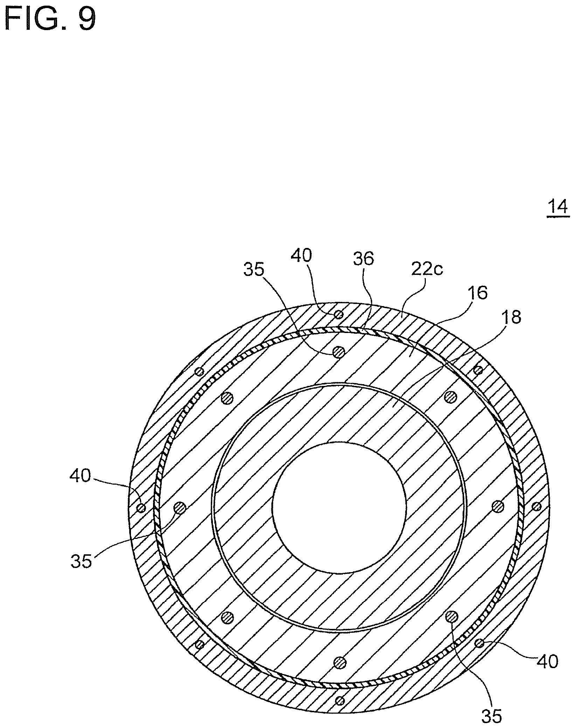

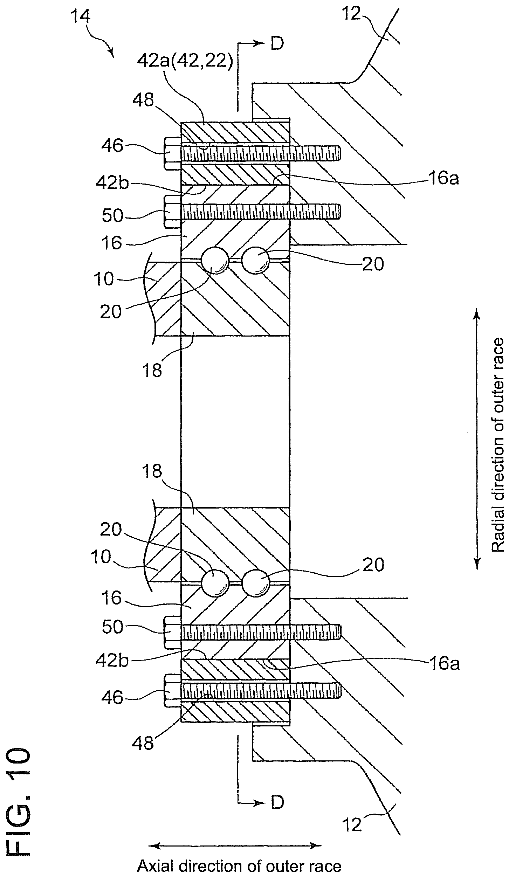

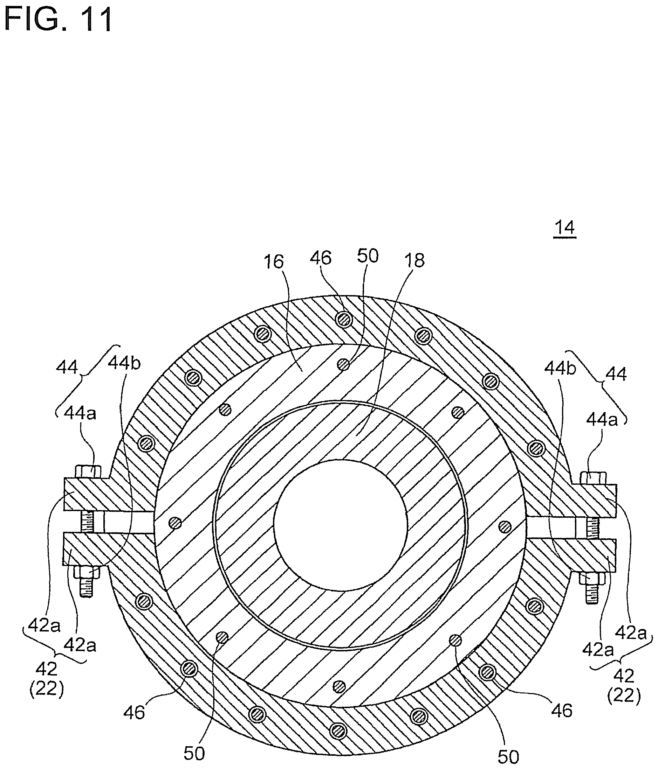

FIG. 2 is a schematic cross-sectional view of a slewing bearing device according to one embodiment of the present invention. FIGs. 3 and 4 are each an example of a cross-sectional view of the slewing bearing device illustrated in FIG. 2 taken along line A-A. FIG. 5 is a schematic cross-sectional view of a slewing bearing device according to one embodiment of the present invention. FIGs. 6 and 7 are each an example of a cross-sectional view of the slewing bearing device illustrated in FIG. 5 taken along line B-B. FIG. 8 is a schematic cross-sectional view of a slewing bearing device according to one embodiment of the present invention. FIG. 9 is an example of a cross-sectional view of the slewing bearing device illustrated in FIG. 8 taken along line C-C. FIG. 10 is a schematic cross-sectional view of a slewing bearing device according to one embodiment of the present invention. FIG. 11 is an example of a cross-sectional view of the slewing bearing device illustrated in FIG. 10 taken along line D-D.

In some embodiments, as illustrated in FIGs. 2, 5, 8 and 10 for instance, the slewing bearing device 14 includes an outer race 16 fixed to the rotor hub 12, an inner race 18 fixed to the wind turbine blade 10, a plurality of rolling elements 20 disposed between the outer race 16 and the inner race 18, and a force receiving part 22 fixed to the rotor hub 12. The force receiving part 22 is configured to receive force transmitted from the outer circumferential surface 16a of the outer race 16 when the outer race 16 is about to deform outward in the radial direction of the outer race 16. Here, the rolling elements 20 include, for instance, balls or rollers.

According to the above configuration, when the outer race 16 is about to deform outward in the radial direction of the outer race 16 (hereinafter, when there is merely cited "radial direction", it refers to the radial direction of the outer race), the force receiving part 22 fixed to the rotor hub 12 receives the force transmitted from the outer circumferential surface 16a of the outer race 16, which makes it possible to effectively restrict outward deformation of the outer race 16 in the radial direction by utilizing rigidity of the rotor hub 12. In this way, it is possible to restrict uneven distribution of loads to the plurality of rolling elements 20, and to increase the lifetime of the slewing bearing device 14.

Meanwhile, the bearing is required to have high rigidity, and thus generally includes a material that has high elasticity. Further, the bearing is required to have a long lifetime and thus includes a hard material. Thus, it is not easy to process the outer race, and the production cost of the outer race is likely to rise in a case of the conventional technique in which bolt holes are disposed on the outer race itself and reinforcement members are attached by bolts to restrict deformation. In this regard, according to the slewing bearing device 14 illustrated in FIGs. 2 to 11, force transmitted from the outer race 16 is received by the force receiving part 22 fixed to the rotor hub 12, which makes it possible to restrict deformation of the outer race 16. Thus, it is not necessary to provide bolt holes or the like for attaching reinforcement members for restricting deformation on the outer race itself, unlike the conventional technique. As a result, it is possible to restrict deformation of the outer race 16 without particularly processing the outer race 16, and to reduce cost of the slewing bearing device 14.

In some embodiments, as illustrated in FIGs. 2, 5, 8 and 10 for instance, the force receiving part 22 may be assembled with the rotor hub 12 by spigot-and-socket joint. Further, as illustrated in FIGs. 2, 5, and 8 for instance, the force receiving part 22 may include a support portion 22b disposed over the entire region in the circumferential direction of the outer race so as to support the outer race 16, and a protrusion portion 22c protruding in the axial direction of the outer race 16 along the outer circumferential surface 16a of the outer race 16 from the support portion 22b. In this case, as illustrated in FIGs. 2 and 5 for instance, the slewing bearing device 14 may include a plurality of bolts 34 configured to fix the outer race 16 to the rotor hub 12 along with the support portion 22b. Alternatively, as illustrated in FIG. 8 for instance, the slewing bearing device 14 may include a plurality of bolts 35 configured to fix the outer race 16 to the support portion 22b and a plurality of bolts 37 configured to fix the support portion 22b to the rotor hub 12.

In some embodiments, the protrusion portion 22c may be disposed over the entire region in the circumferential direction of the outer race as illustrated in FIGs. 3, 6, and 9 for instance, or may be disposed dispersedly in the circumferential direction of the outer race as illustrated in FIGs. 4 and 7 for instance. In the example illustrated in each of FIGs. 4 and 7, eight protrusion portions 22c are disposed in the circumferential direction of the outer race. However, the number of protrusion portions 22c is not limited particularly.

In some embodiments, as illustrated in FIG. 2 and 5 for instance, the support portion 22b and the protrusion portion 22c may be formed separately (as separate members), and the protrusion portion 22c may be fixed to the support portion 22b by bolts 26. Alternatively, in some embodiments, as illustrated in FIG. 8 for instance, the support portion 22b and the protrusion portion 22c may be formed integrally (as one piece).

In some embodiments, as illustrated in FIG. 2 for instance, the protrusion portion 22c of the force receiving part 22 includes the first tapered surface 22a facing the outer circumferential surface 16a of the outer race 16. The first tapered surface 22a is formed so that a gap between the first tapered surface 22a and the outer circumferential surface 16a of the outer race 16 decreases in size toward the rotor hub 12 in the axial direction of the outer race 16. In this case, as illustrated in FIG. 2 for instance, the slewing bearing device 14 includes a wedge member 24 disposed between the first tapered surface 22a and the outer circumferential surface 16a of the outer race 16. The wedge member 24 includes the second tapered surface 24a disposed at a position adjacent to the first tapered surface 22a and formed along the first tapered surface 22a.

Here, the wedge member 24 may be disposed over the entire region in the circumferential direction of the outer race as illustrated in FIG. 3 for instance, or may be disposed dispersedly in the circumferential direction of the outer race as illustrated in FIG. 4 for instance. In the example illustrated in FIG. 4, eight wedge members 24 are disposed in the circumferential direction of the outer race. However, the number of wedge members 24 is not limited particularly.

With the above configuration, it is possible to have no gap between the first tapered surface 22a of the force receiving part 22 and the outer circumferential surface 16a of the outer race 16 by use of the wedge member 24, which makes it possible to transmit the outward force in the radial direction from the outer race 16 to the force receiving part 22 securely via the wedge member 24. Thus, it is possible to enhance the effect to restrict deformation of the outer race 16 achieved by the force receiving part 22 that can utilize the rigidity of the rotor hub 12.

In some embodiments, as illustrated in FIG. 2 for instance, the slewing bearing device 14 further includes bolts 26 which extend in the axial direction of the outer race 16, for fixing the wedge member 24 to the force receiving part 22 and applying pressing force toward the rotor hub 12 in the axial direction of the outer race 16 to the wedge member 24.

With the above configuration, the pressing force toward the rotor hub 12 in the axial direction of the outer race 16 is applied to the wedge member 24 by the bolts 26, which makes it possible to maintain a state in which the wedge member 24 is in contact with the first tapered surface 22a of the force receiving part 22 and the outer circumferential surface 16a of the outer race 16. In this way, it is possible to transmit the outward force in the radial direction from the outer race 16 to the force receiving part 22 via the wedge member 24 more securely. Thus, it is possible to enhance the effect to restrict deformation of the outer race 16 achieved by the force receiving part 22 that can utilize the rigidity of the rotor hub 12.

Here, in the exemplary embodiment illustrated in FIG. 2, the bolts 26 for fixing the protrusion portion 22c to the support portion 22b also serve as bolts for applying pressing force to the wedge member 24. In this way, it is possible to simplify the configuration of the slewing bearing device 14.

Further, in the exemplary embodiment illustrated in FIG. 2, the wedge member 24 includes a bolt penetration portion 30 including through holes 29 into which the bolts 26 are inserted. The through holes 29 are disposed outside the second tapered surface 24a in the radial direction of the outer race 16. Each through hole 29 is a clearance hole with no thread, and the diameter of each through hole 29 is set to be larger than the diameter of the shaft portion of each bolt 26. A gap 32 is formed in the axial direction of the bolts 26 between the protrusion portion 22c and the bolt penetration portion 30. In this way, it is possible to perform minor adjustment on the position of the wedge member 24 along the first tapered surface 22a.

In some embodiments, as illustrate in FIG. 5, the force receiving part 22 includes at least one bolt hole 31 extending in the radial direction of the outer race 16. In this case, as illustrated in FIG. 5 for instance, the slewing bearing device 14 includes at least one bolt 28 screwed into the bolt hole 31 so that the tip end 28a of the bolt 28 contacts the outer circumferential surface 16a of the outer race 16. A plurality of bolts 28 may be arranged in the axial direction of the outer race 16 as illustrated in FIG. 5, or may be arranged in the circumferential direction of the outer race 16 as illustrated in FIGs. 6 and 7.

With the above configuration, the tip end 28a of the bolt 28 screwed into the bolt hole 31 formed through the force receiving part 22 is in contact with the outer circumferential surface 16a of the outer race 16, which makes it possible to securely transmit the outward force from the outer race 16 in the radial direction of the outer race 16 to the force receiving part 22 via the screwed joint of the bolt 28 and the bolt hole 31. Thus, it is possible to enhance the effect to restrict deformation of the outer race 16 achieved by the force receiving part 22 that can utilize the rigidity of the rotor hub 12.

Here, in the embodiment illustrated in FIG. 5, the at least one bolt 28 being employed has a length (not including the head) L2 that is larger than the distance L1 between the outer circumferential surface 16a of the outer race 16 and the outer circumferential surface 22d of the protrusion portion 22c (the inlet of the bolt hole 31). In this way, it is possible to make the tip end 28a of the bolt 28 contact the outer circumferential surface 16a of the outer race 16 securely, and to enhance the effect to restrict deformation of the outer race 16.

In some embodiments, as illustrated in FIGs. 8 and 9, the slewing bearing device 14 includes a resin portion 36 formed so as to fill a gap between the inner circumferential surface 22e of the protrusion portion 22c of the force receiving part 22 and the outer circumferential surface 16a of the outer race 16. The resin portion 36 may be formed by adding a hardening agent to resin.

With this configuration, the gap between the force receiving part 22 and the outer circumferential surface 16a of the outer race 16 is filled with the resin portion 36, which makes it possible to transmit the outward force in the radial direction from the outer race 16 to the force receiving part 22 via the resin portion 36 securely. Thus, it is possible to enhance the effect to restrict deformation of the outer race 16 achieved by the force receiving part 22 that can utilize the rigidity of the rotor hub 12.

In some embodiments, as illustrated in FIG. 8, the slewing bearing device 14 may include a lid member 38 covering the resin portion 36 so that the resin portion 36 does not come out from the gap between the force receiving part 22 and the outer circumferential surface 16a of the outer race 16. In this case, the lid member 38 may be fixed to the protrusion portion 22c with bolts 40.

In some embodiments, as illustrated in FIGs. 10 and 11 for instance, the force receiving part 22 is a ring-shaped unit 42 including a plurality of segments 42a extending along the outer circumferential surface 16a of the outer race 16. The slewing bearing device 14 for a wind turbine illustrated in FIGs. 10 and 11 includes at least one fastening member 44 (see FIG. 11) for fastening the plurality of segments 42a to one another so as to clamp the outer race 16 with the ring-shaped unit 42 from outside in the radial direction of the outer race 16, and at least one fixing member 46 for fixing the ring-shaped unit 42 to the rotor hub 12.

The fastening member 44 may include a bolt 44a and a nut 44b for fastening adjacent two of the segments 42a, as illustrated in FIG. 10 for instance. Further, the fixing member 46 may be a bolt as illustrated in FIGs. 10 and 11, for instance. In this case, through holes 48 of the fixing member 46 disposed on the segments 42a are formed as through holes (clearance holes with no thread) so as not to interrupt the effect to clamp the outer race 16 with the ring-shaped unit 42. Specifically, the diameter of each through hole 48 is set to be larger than the diameter of the shaft portion of each fixing member 46. Here, in the embodiment illustrated in FIG. 11, the outer race 16 is directly fixed to the rotor hub 12 with bolts 50.

With the configuration illustrated in FIGs. 10 and 11, since the ring-shaped unit 42 as the force receiving part 22 is fixed to the rotor hub 12 by the fixing member 46, it is possible to effectively restrict deformation of the outer race 16 with the ring-shaped unit 42 that can utilize the rigidity of the rotor hub 12. Further, since the fastening function of the fastening member 44 maintains a state in which the inner circumferential surface 42b (see FIG. 10) of the ring-shaped unit 42 is in contact with the outer circumferential surface 16a (see FIG. 10) of the outer race 16, the outward force in the radial direction from the outer race 16 is securely transmitted to the ring-shaped unit 42. In this way, it is possible to enhance the effect to restrict deformation of the outer race 16 achieved by the ring-shaped unit 42 that can utilize the rigidity of the rotor hub 12.

The present invention is not limited to the above described embodiments, but includes modification and combination of the above embodiments.

For instance, while the force receiving part 22 is assembled with the rotor hub 12 by spigot-and-socket joint in the embodiments illustrated in FIGs. 1 to 11, the force receiving part 22 may be formed integrally (as one piece) with the rotor hub 12.

## Claims

1. A slewing bearing device (14) for a wind turbine (100) for attaching a wind turbine blade (10) to a rotor hub (12) rotatably, the slewing bearing device comprising:
an outer race (16) fixed to the rotor hub (12);
an inner race (18) fixed to the wind turbine blade (10); and
a plurality of rolling elements (20) disposed between the outer race (16) and the inner race (18);
a force receiving part (22) fixed to the rotor hub (12), the force receiving part (22) being configured to receive force transmitted from an outer circumferential surface (16a) of the outer race (16) when the outer race (16) is about to deform outward in a radial direction of the outer race (16),
wherein the force receiving part (22) includes a support portion (22b) disposed over the entire region in the circumferential direction of the outer race (16) so as to support the outer race (16), and a protrusion portion (22c) protruding in the axial direction of the outer race (16) along the outer circumferential surface (16a) of the outer race (16) from the support portion (22b)
wherein the force receiving part (22) includes a first tapered surface (22a) facing the outer circumferential surface (16a) of the outer race (16), and
wherein the first tapered surface (22a) is formed so that a gap between the first tapered surface (22a) and the outer circumferential surface (16a) of the outer race (16) is reduced toward the rotor hub (12) in an axial direction of the outer race (16),
wherein the slewing bearing device (14) for a wind turbine (100) further comprises a wedge member (24) disposed between the first tapered surface (22a) and the outer circumferential surface (16a) of the outer race (16)**characterized in that** the slewing bearing device (14) further comprises a bolt (26) extending in the axial direction of the outer race (16), for fixing the wedge member (24) to the force receiving part (22) and applying pressing force toward the rotor hub (12) in the axial direction of the outer race (16) to the wedge member (24),
wherein the wedge member (24) includes a bolt penetration portion (30) including a through hole (29) into which the bolt (26) is inserted,
wherein the through hole (29) is disposed outside the second tapered surface (24a) in the radial direction of the outer race (16), each through hole (29) being a clearance hole with no thread, and the diameter of each through hole (29) being set to be larger than the diameter of the shaft portion of each bolt (26) and
wherein a gap (32) is formed in the axial direction of the bolt (26) between the protrusion portion (22c) and the bolt penetration portion (30).

2. The slewing bearing device (14) for a wind turbine (100) according to claim 1,
wherein the force receiving part (22) is assembled with the rotor hub (12) by spigot-and-socket joint.

3. The slewing bearing device (14) for a wind turbine (100) according to claim 1 or 2, further comprising a bolt (34) configured to fix the outer race (16) to the rotor hub (12) along with the support portion (22b).

4. The slewing bearing device (14) for a wind turbine (100) according to any one of claims 1 to 3, wherein the outer race (16) is disposed axially adjacent to the support portion (22b) of the force receiving part (22) so as to be supported by the support portion (22b) attached to the rotor hub (12).

5. A wind turbine rotor (6), comprising:
at least one wind turbine blade (10);
a rotor hub (12) to which the at least one wind turbine blade (10) is attached; and
a slewing bearing device (14) for a wind turbine (100), for rotatably attaching the at least one wind turbine blade (10) to the rotor hub (12),
wherein the slewing bearing device (14) for a wind turbine (100) is the slewing bearing device (14) for a wind turbine (100) according to any one of claims 1 to 4.

6. A wind turbine power generator (100) comprising the wind turbine rotor (6) according to claim 5 and a generator (8) driven in accordance with rotation of the wind turbine rotor (6).

## Patentansprüche

1. Großwälzlagervorrichtung (14) für eine Windturbine (100) zur drehbaren Befestigung eines Windturbinenblatts (10) an einer Rotornabe (12), die Großwälzlagervorrichtung umfassend:
einen Außenring (16), der an der Rotornabe (12) befestigt ist,
einen Innenring (18), der an dem Windturbinenblatt (10) befestigt ist,
mehrere Rollelemente (20), die zwischen dem Außenring (16) und dem Innenring (18) angeordnet sind, und
einen Kraftaufnahmeteil (22), der an der Rotornabe (12) befestigt ist, wobei der Kraftaufnahmeteil (22) konfiguriert ist, eine Kraft aufzunehmen, die von einer äußeren Umfangsfläche (16a) des Außenrings (16) übertragen wird, wenn der Außenring (16) im Begriff ist, sich in einer radialen Richtung des Außenrings (16) nach außen zu verformen,
wobei der Kraftaufnahmeteil (22) einen Stützabschnitt (22b), der über den gesamten Bereich in Umfangsrichtung des Außenrings (16) angeordnet ist, um den Außenring (16) zu stützen, und einen Vorsprungabschnitt (22c), der in axialer Richtung des Außenrings (16) entlang der äußeren Umfangsfläche (16a) des Außenrings (16) vom Stützabschnitt (22b) vorsteht, beinhaltet,
wobei der Kraftaufnahmeteil (22) eine erste abgeschrägte Fläche (22a), die zur äußeren Umfangsfläche (16a) des Außenrings (16) weist, beinhaltet und
wobei die abgeschrägte erste Fläche (22a) so geformt ist, dass eine Lücke zwischen der ersten abgeschrägten Fläche (22a) und der äußeren Umfangsfläche (16a) des Außenrings (16) in Richtung der Rotornabe (12) in axialer Richtung des Außenrings (16) verringert ist,
wobei die Großwälzlagervorrichtung (14) für eine Windturbine (100) ferner ein Keilelement (24) umfasst, das zwischen der ersten abgeschrägten Fläche (22a) und der äußeren Umfangsfläche (16a) des Außenrings (16) angeordnet ist, **dadurch gekennzeichnet, dass** die Großwälzlagervorrichtung (14) ferner eine Schraube (26) umfasst, die sich in axialer Richtung des Außenrings (16) erstreckt, um das Keilelement (24) am Kraftaufnahmeteil (22) zu befestigen und Druckkraft in Richtung der Rotornabe (12) in axialer Richtung des Außenrings (16) auf das Keilelement (24) auszuüben,
wobei das Keilelement (24) einen Schraubendurchsteckabschnitt (30) mit einem durchgehenden Loch (29) beinhaltet, in das die Schraube (26) gesteckt wird,
wobei das durchgehende Loch (29) außerhalb der zweiten abschrägten Fläche (24a) in radialer Richtung des Außenrings (16) angeordnet ist, wobei jedes durchgehende Loch (29) ein Durchgangsloch ohne Gewinde ist und der Durchmesser jedes durchgehenden Lochs (29) so eingestellt ist, dass er größer ist als der Durchmesser des Schaftabschnitts jeder Schraube (26) und
wobei eine Lücke (32) in axialer Richtung der Schraube (26) zwischen dem Vorsprungabschnitt (22c) und dem Schraubendurchsteckabschnitt (30) gebildet wird.

2. Großwälzlagervorrichtung (14) für eine Windturbine (100) nach Anspruch 1,
wobei der Kraftaufnahmeteil (22) durch eine Steckmuffenverbindung mit der Rotornabe (12) zusammengebaut wird.

3. Großwälzlagervorrichtung (14) für eine Windturbine (100) nach Anspruch 1 oder 2, ferner umfassend eine Schraube (34), die konfiguriert ist, den Außenring (16) zusammen mit dem Stützabschnitt (22b) an der Rotornabe (12) zu befestigen.

4. Großwälzlagervorrichtung (14) für eine Windturbine (100) nach einem der Ansprüche 1 bis 3, wobei der Außenring (16) axial benachbart zum Stützabschnitt (22b) des Kraftaufnahmeteils (22) angeordnet ist, um von dem Stützabschnitt (22b), der an der Rotornabe (12) befestigt ist, gestützt zu werden.

5. Windturbinenrotor (6), umfassend:
mindestens ein Windturbinenblatt (10),
eine Rotornabe (12), an der mindestens ein Windturbinenblatt (10) befestigt ist, und
eine Großwälzlagervorrichtung (14) für eine Windturbine (100) zur drehbaren Befestigung des mindestens einen Windturbinenblatts (10) an der Rotornabe (12),
wobei die Großwälzlagervorrichtung (14) für eine Windturbine (100) die Großwälzlagervorrichtung (14) für eine Windturbine (100) nach einem der Ansprüche 1 bis 4 ist.

6. Windkraftanlage (100), umfassend den Windturbinenrotor (6) nach Anspruch 5 und einen Generator (8), der gemäß einer Drehung des Windturbinenrotors (6) angetrieben wird.

## Revendications

1. Dispositif de palier d'orientation (14) pour une éolienne (100) pour fixer de façon rotative une pale d'éolienne (10) sur un moyeu de rotor (12), le dispositif de palier d'orientation comportant :
une piste extérieure (16) fixée sur le moyeu de rotor (12) ;
une piste intérieure (18) fixée sur la pale d'éolienne (10) ; et
une pluralité d'éléments de roulement (20) disposés entre la piste extérieure (16) et la piste intérieure (18) ;
une partie de réception de force (22) fixée sur le moyeu de rotor (12), la partie de réception de force (22) étant configurée pour recevoir la force transmise depuis une surface circonférentielle externe (16a) de la piste extérieure (16) lorsque la piste extérieure (16) est sur le point de se déformer vers l'extérieur dans une direction radiale de la piste extérieure (16),
dans lequel la partie de réception de force (22) comprend une partie de support (22b) disposée sur toute la région dans la direction circonférentielle de la piste extérieure (16) afin de supporter la piste extérieure (16) et une partie en saillie (22c) faisant saillie dans la direction axiale de la piste extérieure (16) le long de la surface circonférentielle externe (16a) de la piste extérieure (16) depuis la partie de support (22b),
dans lequel la partie de réception de force (22) comprend une première surface progressivement rétrécie (22a) faisant face à la surface circonférentielle externe (16a) de la piste extérieure (16), et
dans lequel la première surface progressivement rétrécie (22a) est formée de sorte qu'un espace entre la première surface progressivement rétrécie (22a) et la surface circonférentielle externe (16a) de la piste extérieure (16) est réduit vers le moyeu de rotor (12) dans une direction axiale de la piste extérieure (16),
dans lequel le dispositif de palier d'orientation (14) pour une éolienne (100) comprend en outre un élément de cale (24) disposé entre la première surface progressivement rétrécie (22a) et la surface circonférentielle externe (16a) de la piste extérieure (16), **caractérisé en ce que** le dispositif de palier d'orientation (14) comprend en outre une vis (26) s'étendant dans la direction axiale de la piste extérieure (16), pour fixer l'élément de cale (24) sur la partie de réception de force (22) et appliquant la force de pression vers le moyeu de rotor (12) dans la direction axiale de la piste extérieure (16) vers l'élément de cale (24),
dans lequel l'élément de cale (24) comprend une partie de pénétration de vis (30) comprenant un trou débouchant (29) dans lequel la vis (26) est insérée,
dans lequel le trou débouchant (29) est disposé à l'extérieur de la seconde surface progressivement rétrécie (24a) dans la direction radiale de la piste extérieure (16), chaque trou débouchant (29) étant un trou de jeu sans filetage, et le diamètre de chaque trou débouchant (29) étant déterminé pour être supérieur au diamètre de la partie de tige de chaque vis (26), et
dans lequel un espace (32) est formé dans la direction axiale de la vis (26) entre la partie de saillie (22c) et la partie de pénétration de vis (30).

2. Dispositif de palier d'orientation (14) pour une éolienne (100) selon la revendication 1,
dans lequel la partie de réception de force (22) est assemblée avec le moyeu de rotor (12) par un assemblage emboîté en tulipe.

3. Dispositif de palier d'orientation (14) pour une éolienne (100) selon la revendication 1 ou 2, comprenant en outre une vis (34) configurée pour fixer la piste extérieure (16) sur le moyeu de rotor (12) conjointement avec la partie de support (22b).

4. Dispositif de palier d'orientation (14) pour une éolienne (100) selon l'une quelconque des revendications 1 à 3, dans lequel la piste extérieure (16) est disposée de manière axialement adjacente à la partie de support (22b) de la partie de réception de force (22) afin d'être supportée par la partie de support (22b) fixée sur le moyeu de rotor (12).

5. Rotor d'éolienne (6) comprenant :
au moins une pale d'éolienne (10) ;
un moyeu de rotor (12) sur lequel la au moins une pale d'éolienne (10) est fixée ; et
un dispositif de palier d'orientation (14) pour une éolienne (100), pour fixer de façon rotative la au moins une pale d'éolienne (10) sur le moyeu de rotor (12),
dans lequel le dispositif de palier d'orientation (14) pour une éolienne (100) est le dispositif de palier d'orientation (14) pour une éolienne (100) selon l'une quelconque des revendications 1 à 4.

6. Génératrice d'énergie éolienne (100) comprenant le rotor d'éolienne (6) selon la revendication 5 et une génératrice (8) entraînée selon la rotation du rotor d'éolienne (6).
